# EUROPÄISCHE PATENTANMELDUNG

(11) **EP 3 875 223 A1**
(43) Veröffentlichungstag der Anmeldung: **08.09.2021**
(21) Anmeldenummer: 20160338.8
(22) Anmeldetag: 02.03.2020
(51) Int. Cl.: B25D 11/00, B25F 5/02

(54) **WERKZEUGMASCHINE MIT SCHUTZBÜGELEINRICHTUNG FÜR AKKUS**

(71) Anmelder: Hilti Aktiengesellschaft, 9494 Schaan (LI)
(72) Erfinder: Bader, Thomas, 86899 Landsberg am Lech (DE); Tussing, Torsten, 86836 Obermeitingen (DE); Laudensack, Christian, 86477 Adelsried (DE); Schöpke, Sören, 86859 Igling (DE); Doberenz, Matthias, 86836 Obermeitingen (DE); Brandner, Michael, 86899 Landsberg am Lech / Erpfting (DE)
(74) Vertreter: Hilti Aktiengesellschaft Corporate Intellectual Property

(57) **Zusammenfassung**

Werkzeugmaschine, insbesondere Meißelhammer, enthaltend einen ersten und zweiten Seitenhandgriff und ein Werkzeuggehäuse mit einer Schnittstelle zum wiederlösbaren Aufnehmen und Halten eines ersten sowie zweiten Akkumulators, wobei eine durch den ersten sowie zweiten Seitenhandgriff verlaufende Seitenhandgriffsachse im Wesentlichen senkrecht zu einer durch das Werkzeuggehäuse verlaufende Arbeitsachse angeordnet ist.

Die Werkzeugmaschine enthält eine Schutzvorrichtung zum Schutz des ersten und zweiten Akkumulators, welche ein Innenvolumen zum wenigstens teilweisen Aufnehmen des ersten und zweiten Akkumulators aufweist.

## Beschreibung

Die vorliegende Erfindung betrifft eine Werkzeugmaschine, insbesondere Meißelhammer, enthaltend einen ersten und zweiten Seitenhandgriff und ein Werkzeuggehäuse mit einer Schnittstelleneinrichtung zum wiederlösbaren Aufnehmen und Halten eines ersten sowie zweiten Akkumulators, wobei eine durch den ersten sowie zweiten Seitenhandgriff verlaufende Seitenhandgriffsachse im Wesentlichen senkrecht zu einer durch das Werkzeuggehäuse verlaufende Arbeitsachse angeordnet ist.

Bohr- und/oder Meisselhammer der eingangs genannten Art sind grundsätzlich aus dem Stand der Technik bekannt.

Wenn Akkumulatoren zur Versorgung der Werkzeugmaschine mit elektrischer Energie verwendet werden, ist es vorteilhaft, dass besondere Maßnahmen zum Schutz der Akkumulatoren gegen Schläge und andere mechanische Einwirkungen getroffen werden. Akkumulatoren können durchaus empfindlich sein bzw. störanfällig auf derartige mechanische Einwirkungen, wie z.B. Schläge, reagieren.

Aus dem Stand der Technik bekannte Schutzvorrichtungen für Akkumulatoren an Werkzeugmaschinen sind für gewöhnlich unzureichend, komplex und können bei der Verwendung der akku-betriebenen Werkzeugmaschine hinderlich sein.

Es ist Aufgabe der vorliegenden Erfindung einen Werkzeugmaschine bereitzustellen, die eine verbesserte Schutzvorrichtung für Akkumulatoren zur Versorgung einer Werkzeugmaschine mit elektrischer Energie enthält.

Die Aufgabe wird gelöst durch eine Werkzeugmaschine, insbesondere Meißelhammer, enthaltend einen ersten und zweiten Seitenhandgriff und ein Werkzeuggehäuse mit einer Schnittstelleneinrichtung zum wiederlösbaren Aufnehmen und Halten eines ersten sowie zweiten Akkumulators, wobei eine durch den ersten sowie zweiten Seitenhandgriff verlaufende Seitenhandgriffsachse im Wesentlichen senkrecht zu einer durch das Werkzeuggehäuse verlaufende Arbeitsachse angeordnet ist.

Erfindungsgemäß ist vorgesehen, dass eine Schutzvorrichtung zum Schutz des ersten und zweiten Akkumulators enthalten ist, welche ein Innenvolumen zum wenigstens teilweisen Aufnehmen des ersten und zweiten Akkumulators aufweist.

Gemäß einer vorteilhaften Ausgestaltung der vorliegenden Erfindung kann es möglich sein, dass die Schutzvorrichtung in eine Richtung im Wesentlichen parallel zu der Seitenhandgriffachse eine Länge zwischen 350 mm und 450 mm, insbesondere von 400 mm, aufweist. Hierdurch weist die Schutzvorrichtung eine ausreichende Länge zum Aufnehmen und Halten von zwei Akkumulatoren auf.

Entsprechend einer weiteren vorteilhaften Ausgestaltung der vorliegenden Erfindung kann es möglich sein, dass die Schutzvorrichtung wenigstens eine Auflagefläche enthält, wobei eine sich durch die wenigstens eine Auflagefläche erstreckende Ebene im Wesentlichen parallel zu der Seitenhandgriffachse und/oder senkrecht zu der Arbeitsachse angeordnet ist. Auf der Auflagefläche kann die Werkzeugmaschine relativ sicher abgestellt werden, wenn die Werkzeugmaschine umgedreht und auf den Kopf gestellt wird. Ein sicheres Abstellen bzw. Aufden-Kopf-stellen ist insbesondere vorteilhaft, wenn beispielweise das Werkzeug aus der Werkzeugmaschine entfernt wird.

Gemäß einer vorteilhaften Ausgestaltung der vorliegenden Erfindung kann es möglich sein, dass an dem Werkzeuggehäuse wenigstens ein Zusatzhandgriff enthalten ist, wobei der wenigstens eine Zusatzhandgriff so an dem Werkzeuggehäuse angeordnet ist, dass eine durch den wenigstens einen Zusatzhandgriff verlaufende Zusatzhandgriffachse im Wesentlichen parallel zu der Seitenhandgriffachse und/oder senkrecht zu der Arbeitsachse angeordnet ist.

Entsprechend einer weiteren vorteilhaften Ausgestaltung der vorliegenden Erfindung kann es möglich sein, dass die Schutzvorrichtung ein erstes Rahmenelement und ein zweites Rahmenelement enthält, wobei sowohl das erste als auch das zweite Rahmenelement jeweils eine Oberseite sowie eine Unterseite enthält und wobei das erste sowie zweite Rahmenelement an der jeweiligen Oberseite miteinander wiederlösbar verbindbar sind und das erste sowie zweite Rahmenelement an der jeweiligen Unterseite mit dem Werkzeuggehäuse wiederlösbar verbindbar sind. Hierdurch ist eine modulare Bauweise für die Schutzvorrichtung gegeben. Im Falle der Beschädigung des ersten oder zweiten Rahmenelements kann modular sowie auf einfache Art und Weise das jeweils beschädigte Rahmenelement ausgetauscht werden. Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Figur 1: eine Rückansicht auf eine Werkzeugmaschine mit einem ersten und zweiten Seitenhandgriff sowie einer Schutzvorrichtung zum Schutz eines ersten und zweiten Akkumulators gemäß einer ersten Ausführungsform;
- Figur 2: eine perspektivische Vorderansicht auf die Werkzeugmaschine mit dem ersten und zweiten Seitenhandgriff sowie der Schutzvorrichtung zum Schutz des ersten und zweiten Akkumulators gemäß der ersten Ausführungsform;
- Figur 3: eine Seitenansicht auf die Werkzeugmaschine;
- Figur 4: eine perspektivische Rückansicht auf die Werkzeugmaschine mit dem ersten und zweiten Akkumulator in einer Position außerhalb der Schutzvorrichtung;
- Figur 5: eine Rückansicht auf die Werkzeugmaschine mit dem ersten und zweiten Seitenhandgriff, der Schutzvorrichtung zum Schutz des ersten und zweiten Akkumulators gemäß der ersten Ausführungsform sowie einem Zusatzhandgriff;
- Figur 6: eine weitere perspektivische Rückansicht auf die Werkzeugmaschine mit dem ersten und zweiten Akkumulator in einer Position außerhalb der Schutzvorrichtung gemäß der ersten Ausführungsform;
- Figur 7: eine perspektivische Vorderansicht auf die Werkzeugmaschine mit dem ersten und zweiten Akkumulator in einer Position innerhalb der Schutzvorrichtung gemäß der ersten Ausführungsform;
- Figur 8: eine perspektivische Ansicht auf die Schutzvorrichtung mit einem ersten und zweiten Seitenmodul gemäß einer zweiten Ausführungsform;
- Figur 9: eine perspektivische Ansicht auf eine Vorderseite des ersten Seitenmoduls gemäß der zweiten Ausführungsform; und
- Figur 10: eine perspektivische Ansicht auf eine Rückseite des zweiten Seitenmoduls gemäß der zweiten Ausführungsform.

### Ausführungsbeispiele:

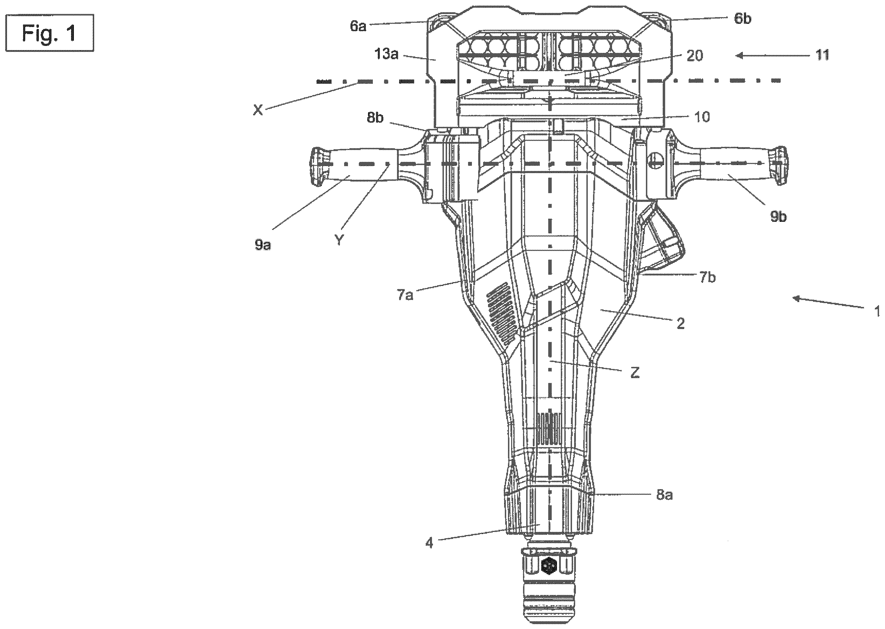

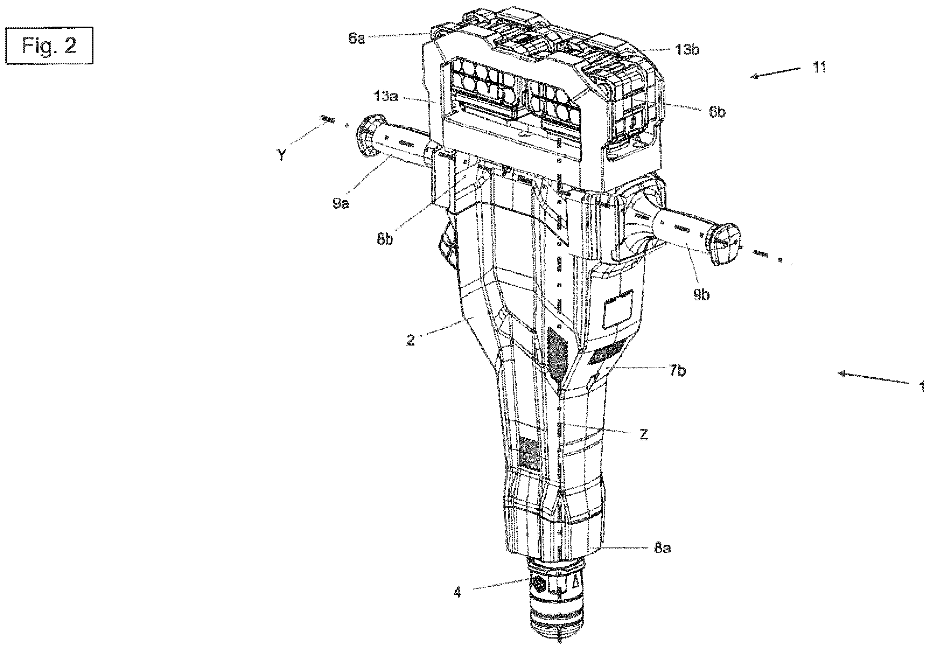

Figur 1 und 2 zeigt eine Werkzeugmaschine 1 in Ausgestaltung eines Meißelhammers. Bei der Werkzeugmaschine 1 kann es sich aber auch um einen Bohrhammer, Kombihammer oder dergleichen handeln.

Die Werkzeugmaschine 1 enthält im Wesentlichen ein Werkzeuggehäuse 2, einen ersten Seitenhandgriff 9a, zweiten Seitenhandgriff 9b, eine Werkzeugaufnahmeeinrichtung 4 sowie eine Schutzvorrichtung 11 zum Schutz eines ersten und zweiten Akkumulators 6a, 6b.

Im Inneren des Werkzeuggehäuses 2 ist im Wesentlichen ein Antrieb, ein Schlagwerk und ein Steuerungsvorrichtung enthalten. Das Werkzeuggehäuse 2 weist eine erste Seitenfläche 7a, eine zweite Seitenfläche 7b, ein unteres Ende 8a und ein oberes Ende 8b auf. Weder der Antrieb, das Schlagwerk noch die Steuerungsvorrichtung sind in den Figuren dargestellt.

Wie Figur 1 zu entnehmen ist, verläuft eine Arbeitsachse Z durch die Mitte der Werkzeugmaschine.

An der ersten Seitenfläche 7a des Werkzeuggehäuses 2 ist der erste Seitenhandgriff 9a positioniert und an der zweiten Seitenfläche 7b des Werkzeuggehäuses 2 ist der zweite Seitenhandgriff 9b positioniert. Die beiden Seitenhandgriffe 9a, 9b dienen zum Halten und Führen der Werkzeugmaschine 1.

Wie ebenfalls in Figur 1 gezeigt, verläuft eine Seitenhandgriffachse Y durch die Mitte des ersten und zweiten Seitenhandgriffs 9a, 9b. Die Seitenhandgriffachse Y und die Arbeitsachse Z stehen im Wesentlichen senkrecht zueinander.

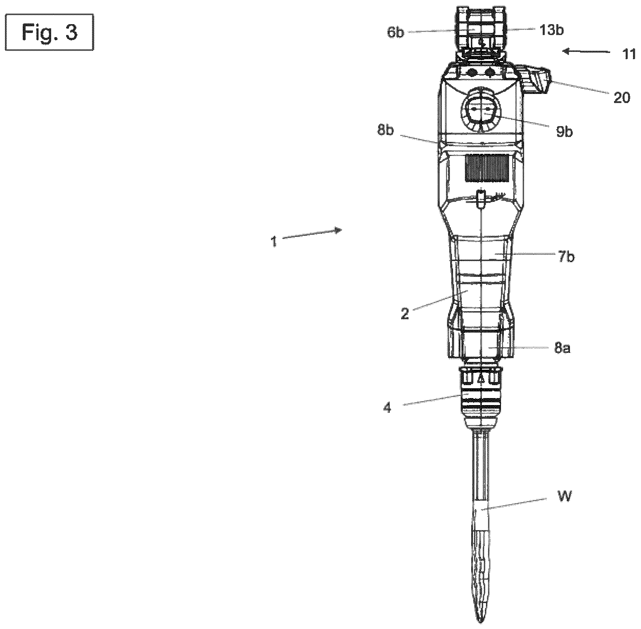

An dem unteren Ende 8a des Werkzeuggehäuses 2 ist die Werkzeugaufnahmeeinrichtung 4 positioniert. Die Werkzeugaufnahmeeinrichtung 4 dient zum wiederlösbaren Aufnehmen und Halten eines Werkzeugs W. Im vorliegenden Falle ist das Werkzeug W als Meißel ausgestaltet, vgl. Figur 3.

Der Antrieb kann als Elektromotor ausgestaltet sein und ist so mit dem Schlagwerk verbunden, dass der Antrieb das Schlagwerk zum Erzeugen von Schlagimpulsen antreibt. Das Schlagwerk ist wiederum so mit der Werkzeugaufnahmeeinrichtung 4 verbunden, dass die vom Schlagwerk erzeugten Schlagimpulse auf das sich in der Werkzeugaufnahmeeinrichtung 4 befindliche Werkzeug W übertragen werden.

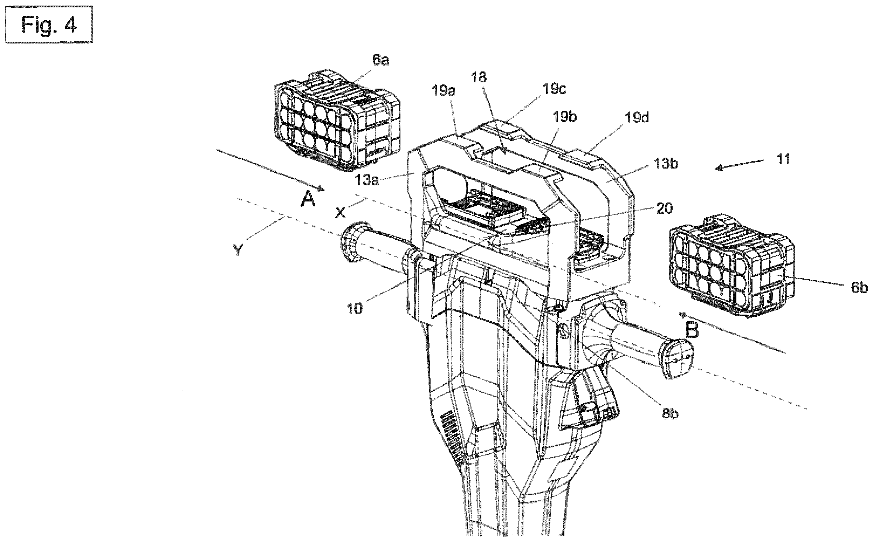

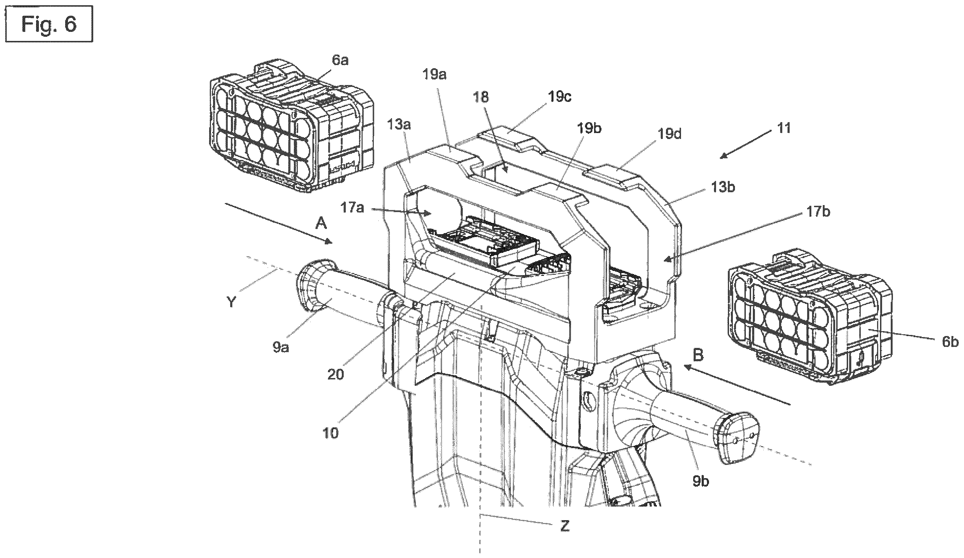

An dem oberen Ende 8b des Werkzeuggehäuses 2 ist eine Schnittstelleneinrichtung 10 sowie die Schutzvorrichtung 11 zum Schutz des ersten und zweiten Akkumulators 6a, 6b vorgesehen. Wie insbesondere in den Figuren 4 und 6 dargestellt, enthält die Schnittstelleneinrichtung 10 eine erste Akkuanschlussstelle 12a und eine zweite Akkuanschlussstelle 12b. Mit Hilfe der ersten Akkuanschlussstelle 12a kann der erste Akkumulator 6a wiederlösbar so mit der Werkzeugmaschine 1 verbunden, dass die in dem ersten Akkumulator 6a gespeicherte elektrische Energie den Verbrauchern der Werkzeugmaschine 1 zur Verfügung gestellt werden kann. Mit Hilfe der zweiten Akkuanschlussstelle 12b kann der zweite Akkumulator 6b wiederlösbar so mit der Werkzeugmaschine 1 verbunden, dass die in dem zweiten Akkumulator 6b gespeicherte elektrische Energie den Verbrauchern der Werkzeugmaschine 1 zur Verfügung gestellt werden kann. Bei den Verbrauchern der elektrischen Energie kann es sich um den Antrieb, die Steuerungsvorrichtung oder anderes handeln.

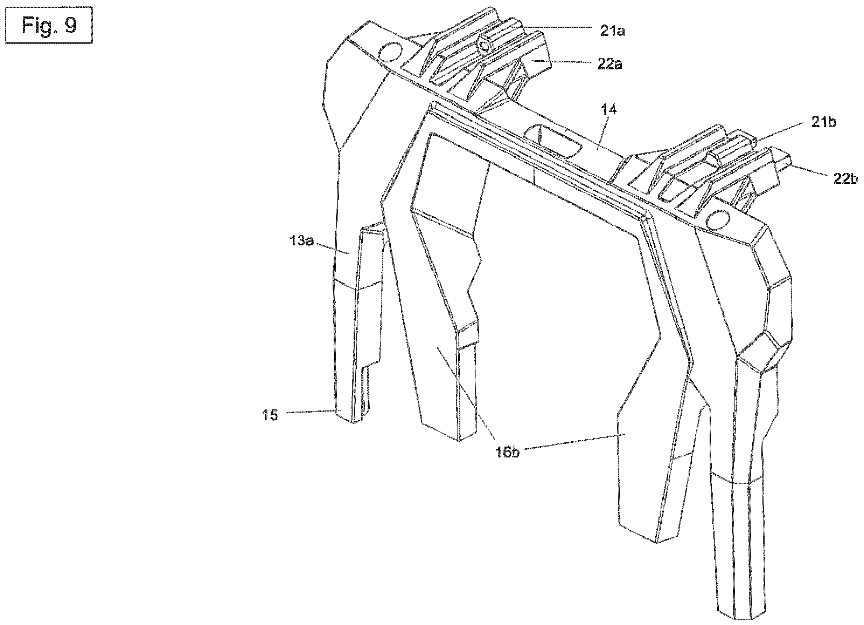

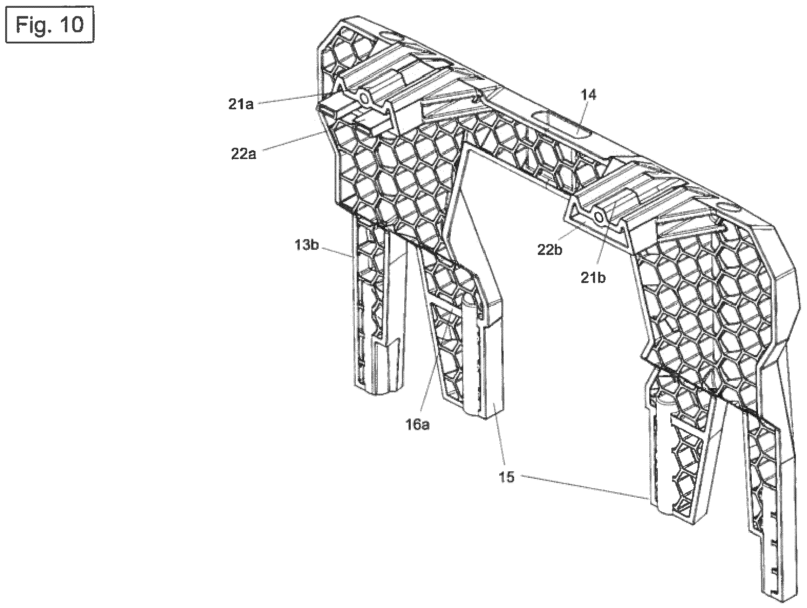

Wie insbesondere in Figur 6 ersichtlich enthält die Schutzvorrichtung 11 zum Schutz des ersten und zweiten Akkumulators 6a, 6b eines erstes und zweites Rahmenelement 13a, 13b. Wie insbesondere in den Figuren 9 und 10 dargestellt, sind sowohl das erste Rahmenelement 13a als auch das zweite Rahmenelement 13b als U-förmige Bügel ausgestaltet. Das als U-förmige Bügel ausgestaltete erste und zweite Rahmenelement 13a, 13b enthält dabei jeweils eine Oberseite 14, eine Unterseite 15, einen Innenseite 16a und eine Außenseite 16b. Die beiden als U-förmige Bügel ausgestalteten Rahmenelemente 13a, 13b der Schutzvorrichtung 11 bilden in ihrer Anordnung ein den Innenbereich der Schutzvorrichtung 11 definierendes Innenvolumen IV. Die im Wesentlichen aus den beiden Rahmenelementen 13a, 13b bestehende Schutzvorrichtung 11 enthält eine erste Öffnung 17a und eine zweite Öffnung 17b. Durch die erste Öffnung 17a kann der erste Akkumulator 6a und durch die zweite Öffnung 17b kann der zweite Akkumulator 6b in das Innere der Schutzvorrichtung geschoben werden, sodass die beiden Akkumulatoren 6a, 6b sich im Innenvolumen IV der Schutzvorrichtung 11 befinden. Die Schutzvorrichtung 11 ist so ausgestaltet, dass die erste und zweite Öffnung 17a, 17b in entgegengesetzte Richtung weisen.

Gemäß einer ersten Ausführungsform der Schutzvorrichtung 11 ist die Unterseite 15 des als U-förmiger Bügel ausgestalteten ersten und zweiten Rahmenelements 13a, 13b fest mit dem oberen Ende 8b des Werkgehäuses 2 verbunden. Darüber hinaus sind die beiden Rahmenelemente 13a, 13b an der jeweiligen Oberseite 14 nicht miteinander verbunden und weisen eine gewisse Aussparung 18 auf, vgl. Figuren 2, 4, 6 und 7. Dadurch, dass die beiden Rahmenelemente 13a, 13b an der jeweiligen Oberseite 14 nicht miteinander verbunden sind und die an der Oberseite 14 befindliche Aussparung 18 zwischen den beiden Rahmenelementen durchgehend ausgestaltet ist, können die beiden Rahmenelemente 13a, 13b an deren Oberseite 14 um einen gewissen Bereich relativ zueinander bewegt werden. Die beiden Rahmenelemente 13a, 13b weisen somit eine gewisse Flexibilität auf.

Gemäß einer alternativen und nicht in den Figuren gezeigten Ausführungsform der Schutzvorrichtung 11 können die beiden Rahmenelemente 13a, 13b an den jeweiligen Oberseiten 14 mit zusätzlichen Verstrebungsstegen oder in Form einer durchgängigen Platte miteinander verbunden sein. Die in den Figuren nicht gezeigten Verstrebungsstege bzw. Platte können dabei aus einem flexiblen oder auch festen Werkstoff gebildet sein. Wenn die Verstrebungsstege bzw. Platte aus einem flexiblen Werkstoff gebildet sind, können sich die beiden Rahmenelemente 13a, 13b relativ zueinander bewegen. Wenn jedoch die Verstrebungsstege bzw. Platte aus einem festen Werkstoff gebildet sind, können sich die beiden Rahmenelemente 13a, 13b nicht relativ zueinander bewegen und bilden eine widerstandsfähige Konstruktion.

Wie in Figur 6 zu erkennen ist, ist die erste und zweite Akkuanschlussstelle 12a, 12b im Inneren der Schutzvorrichtung 11 bzw. in dem Innenvolumen IV der Schutzvorrichtung 11 positioniert. Wie ebenfalls zu erkennen ist, sind die beiden Akkuanschlussstellen 12a, 12b dabei so zueinander ausgerichtet, dass der erste und zweite Akkumulator 6a, 6b in entgegengesetzte Richtungen in die entsprechenden Akkuanschlussstellen 12a, 12b geschoben werden. Der erste Akkumulator 6a wird in Richtung A durch die erste Öffnung 17a und der zweite Akkumulator 6b wird in Richtung B durch die zweite Öffnung 17b in das Innere der Schutzvorrichtung 11 und in die jeweiligen Akkuanschlussstellen 12a, 12b geschoben, vgl. Figur 4 bis 7. Richtung A verläuft dabei im Wesentlichen parallel zu der Seitenhandgriffachse Y und senkrecht zu der Arbeitsachse Z.

Des Weiteren ist an der Oberseite 14 des als U-förmiger Bügel ausgestalteten ersten und zweiten Rahmenelements 13a, 13b gemäß der ersten Ausführungsform der Schutzvorrichtung 11 eine erste, zweite, dritte und vierte Auflagefläche 19a, 19b, 19c, 19d vorgesehen, vgl. Figur 4, 6 und 7. Die erste sowie zweite Auflagefläche 19a, 19b ist dabei an der Oberseite 14 des ersten Rahmenelements 13a und die dritte sowie vierte Auflagefläche 19c, 19d ist an der Oberseite 14 des zweiten Rahmenelements 13b positioniert, vgl. Figur .4 und 6. Die vier Auflageflächen 19a, 19b, 19c, 19d sind eben ausgestaltet und parallel zueinander angeordnet.

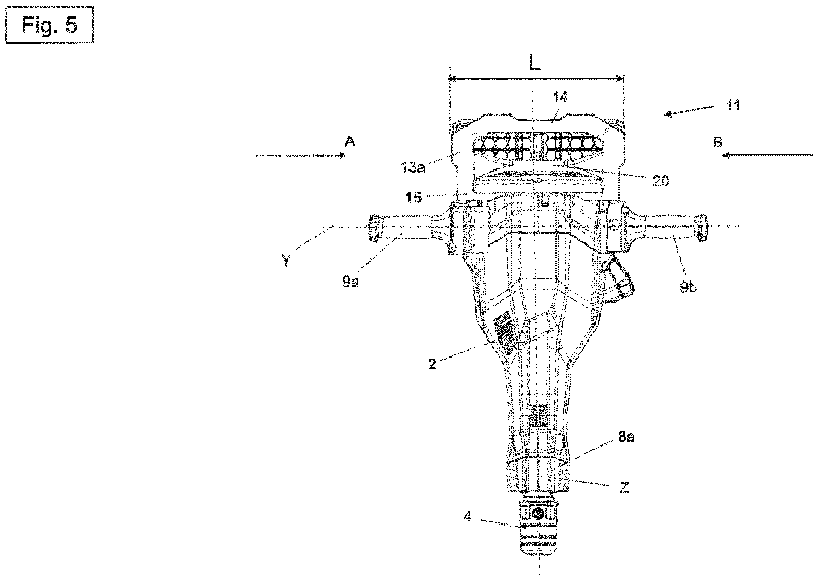

Wie in Figur 5 dargestellt, weist die Schutzvorrichtung 11 in Richtung A bzw. in Richtung B eine bestimmte Länge L auf. Die Länge L liegt dabei zwischen 350 mm und 450 mm. Im vorliegenden und bevorzugten Fall weist die Länge L einen Wert von 400 mm auf. Es ist zu beachten, dass die Länge L wenigstens der Wegstrecke von der Rückseite RS des ersten Akkumulators 6a zu der Rückseite RS des zweiten Akkumulators 6b entspricht, wenn sich der erste Akkumulator 6a in der ersten Akkuanschlussstelle 12a und der zweite Akkumulator 6b in der zweiten Akkuanschlussstelle 12b befindet. Es ist dabei auch möglich, dass die Länge L wenigstens der zweifachen Akkugehäuselänge des ersten oder zweiten Akkumulators 6a, 6b entspricht, wenn der erste und zweite Akkumulator 6a, 6b eine nahezu identische Akkugehäuselänge aufweist. Durch den bestimmten Wert für die Länge L kann sichergestellt werden, dass der erste Akkumulator 6a seitlich in Richtung B und der zweite Akkumulator 6b seitlich in Richtung A nicht über die Schutzvorrichtung 11 hinausragen. Dadurch, dass die beiden Akkumulator 6a, 6b durch die bestimmte Länge L nicht seitlich aus der Schutzvorrichtung 11 hinausragen, berühren die Akkumulatoren 6a, 6b nicht den Untergrund im Falle eines Sturzes der Werkzeugmaschine 1. Im Falle eines Sturzes der Werkzeugmaschine 1 würde lediglich die Schutzvorrichtung 11 und nicht die Akkumulatoren 6a, 6b den Untergrund berühren und somit die plötzlich auftretende Schlagenergie bzw. Schlagimpuls in die Schutzvorrichtung 11 abgeleitet.

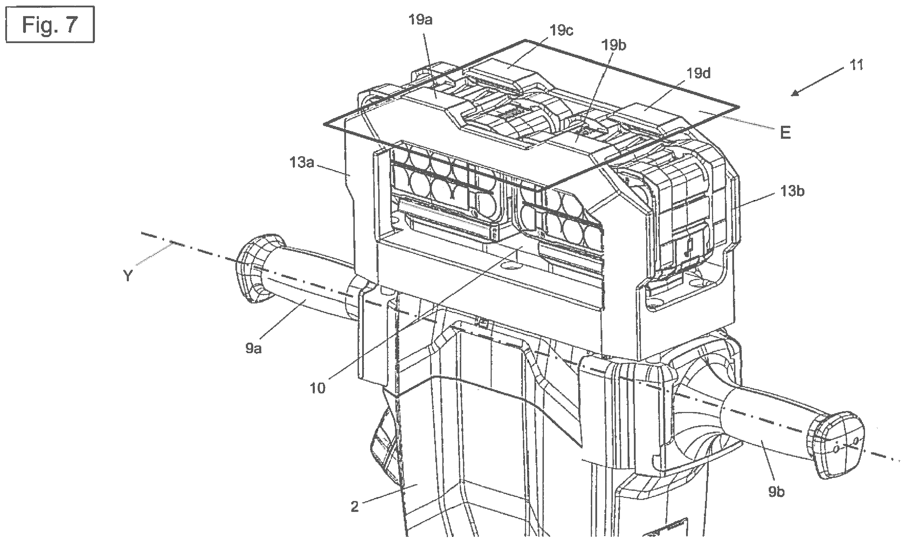

Wie in Figur 7 zu erkennen ist, erstreckt sich eine Ebene E durch die vier Auflageflächen 19a, 19b, 19c, 19d. Die Ebene verläuft dabei im Wesentlichen parallel zu der Seitenhandgriffachse Y und senkrecht zu der Arbeitsachse Z. Die vier Auflageflächen 19a, 19b, 19c, 19d dienen zum sicheren und stabilen Abstellen der Werkzeugmaschine 1, wenn die Werkzeugmaschine 1 verkehrt herum positioniert ist, d.h. auf dem Kopf gestellt ist, um das Werkzeug W aus der Werkzeugaufnahmeeinrichtung 4 zu entnehmen.

Darüber hinaus enthält die Werkzeugmaschine 1 einen Zusatzhandgriff 20. Der Zusatzhangriff 20 ist als Bügel ausgestaltet und enthält ein erstes Ende 20a, ein zweites Ende 20b sowie ein zwischen dem ersten und zweiten Ende 20a, 20b angeordneten Griffbereich 20c. Eine durch den Zusatzhandgriff 20 verlaufende Zusatzhandgriffachse X ist im Wesentlichen parallel zu der Seitenhandgriffachse Y und/oder senkrecht zu der Arbeitsachse Z angeordnet. An dem Zusatzhandgriff 20 kann die Werkzeugmaschine 1 gehalten und geführt werden. In dem vorliegenden Ausführungsbeispiel ist der Zusatzhandgriff 20 an der Schutzvorrichtung 11 positioniert. Hierzu ist das erste und zweite Ende 20a, 20b des als Bügel ausgestalten Zusatzhandgriffs 20 an dem ersten Rahmenelement 13a befestigt.

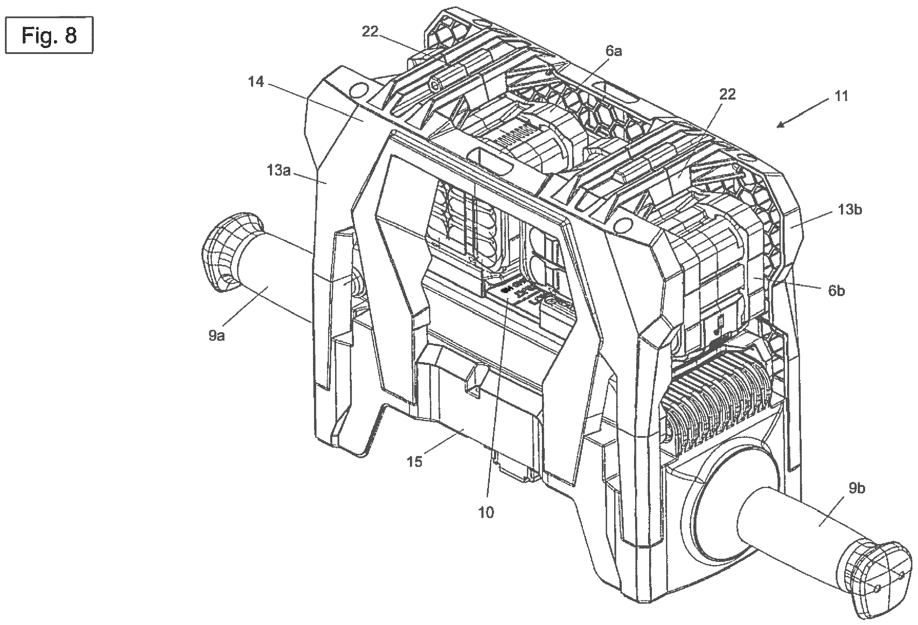

In den Figur 8 bis 10 ist die Schutzvorrichtung 11 gemäß einer zweiten Ausführungsform dargestellt. Die Schutzvorrichtung 11 gemäß der ersten Ausführungsform ist ähnlich der Schutzvorrichtung 11 gemäß der zweiten Ausführungsform ausgestaltet. Die Ausgestaltung der Schutzvorrichtung 11 gemäß der ersten Ausführungsform unterscheidet sich von der Ausgestaltung der Schutzvorrichtung 11 gemäß der zweiten Ausführungsform im Wesentlichen dadurch, dass das erste sowie zweite Rahmenelement 13a, 13b an der Oberseite 14 wiederlösbar miteinander verbunden sind. Zur wiederlösbaren Verbindung des ersten und zweiten Rahmenelements 13a, 13b dient eine Schraubenverbindung. Wie in den Figuren 9 und 10 jeweils ersichtlich ist, enthält sowohl das erste als auch das zweite Rahmenelement 13a, 13b jeweils einen ersten und zweiten Schraubendom 21a, 21b. Die Schrauben sind in den Figuren nicht gezeigt. Darüber hinaus sind die ersten und zweiten Rahmenelemente 13a, 13b an der Oberseite 14 mit Hilfe einer Steckverbindung 22 miteinander wiederlösbar verbunden. Das erste und zweite Rahmenelement 13a, 13b enthält dafür jeweils ein erstes und zweites Steckelement 22a, 22b, wodurch das erste und zweite Rahmenelement 13a, 13b wiederlösbar miteinander verbunden sind.

### Bezugszeichenliste

- 1: Werkzeugmaschine
- 2: Werkzeuggehäuse
- 4: Werkzeugaufnahmeeinrichtung
- 6a: erster Akkumulator
- 6b: zweiter Akkumulator
- 7a: erste Seitenfläche
- 7b: zweite Seitenfläche
- 8a: unteres Ende des Werkzeuggehäuses
- 8b: oberes Ende des Werkzeuggehäuses
- 9a: erster Seitenhandgriff
- 9b: zweiter Seitenhandgriff
- 10: Schnittstelleneinrichtung
- 11: Schutzvorrichtung
- 12a: erste Akkuanschlussstelle
- 12b: zweite Akkuanschlussstelle
- 13a: erstes Rahmenelement
- 13b: zweites Rahmenelement
- 14: Oberseite des ersten/zweiten Rahmenelements
- 15: Unterseite des ersten/zweiten Rahmenelements
- 16a: Innenseite des ersten/zweiten Rahmenelements
- 16b: Außenseite des ersten/zweiten Rahmenelements
- 17a: erste Öffnung der Schutzvorrichtung
- 17b: zweite Öffnung der Schutzvorrichtung
- 18: Aussparung an der Oberseite des ersten/zweiten Rahmenelements
- 19a: erste Auflagefläche
- 19b: zweite Auflagefläche
- 19c: dritte Auflagefläche
- 19d: vierte Auflagefläche
- 20: Zusatzhandgriff
- 21a: erster Schraubendom
- 21b: zweiter Schraubendom
- 22: Steckverbindung
- 22a: erstes Steckelement
- 22b: zweites Steckelement
- E: Ebene durch Auflageflächen
- W: Werkzeug
- X: Zusatzhandgriffachse
- Y: Seitenhandgriffsachse
- Z: Arbeitsachse

## Patentansprüche

1. Werkzeugmaschine (1), insbesondere Meißelhammer, enthaltend einen ersten und zweiten Seitenhandgriff (9a, 9b) und ein Werkzeuggehäuse (2) mit einer Schnittstelleneinrichtung (10) zum wiederlösbaren Aufnehmen und Halten eines ersten sowie zweiten Akkumulators (6a, 6b), wobei eine durch den ersten sowie zweiten Seitenhandgriff (9a, 9b) verlaufende Seitenhandgriffsachse (Y) im Wesentlichen senkrecht zu einer durch das Werkzeuggehäuse verlaufende Arbeitsachse (Z) angeordnet ist, **dadurch gekennzeichnet, dass** eine Schutzvorrichtung (11) zum Schutz des ersten und zweiten Akkumulators enthalten ist, welche ein Innenvolumen zum wenigstens teilweisen Aufnehmen des ersten und zweiten Akkumulators aufweist.

2. Werkzeugmaschine (1) nach Anspruch 1,
**dadurch gekennzeichnet, dass** die Schutzvorrichtung (11) in eine Richtung (A, B) im Wesentlichen parallel zu der Seitenhandgriffachse (Y) eine Länge (L) zwischen 350 mm und 450 mm, insbesondere von 400 mm, aufweist.

3. Werkzeugmaschine (1) nach Anspruch 1 oder 2,
**dadurch gekennzeichnet, dass** die Schutzvorrichtung (11) wenigstens eine Auflagefläche (19a, 19b, 19c, 19d) enthält, wobei eine sich durch die wenigstens eine Auflagefläche (19a, 19b, 19c, 19d) erstreckende Ebene (E) im Wesentlichen parallel zu der Seitenhandgriffachse (Y) und/oder senkrecht zu der Arbeitsachse (Z) angeordnet ist.

4. Werkzeugmaschine (1) nach wenigsten einem der Ansprüche 1 bis 3,
**dadurch gekennzeichnet, dass** an dem Werkzeuggehäuse (2) wenigstens ein Zusatzhandgriff (20) enthalten ist, wobei der wenigstens eine Zusatzhandgriff (20) so an dem Werkzeuggehäuse (2) angeordnet ist, dass eine durch den wenigstens einen Zusatzhandgriff (20) verlaufende Zusatzhandgriffachse (X) im Wesentlichen parallel zu der Seitenhandgriffachse (Y) und/oder senkrecht zu der Arbeitsachse (Z) angeordnet ist.

5. Werkzeugmaschine (1) nach wenigsten einem der Ansprüche 1 bis 4,
**dadurch gekennzeichnet, dass** die Schutzvorrichtung (11) ein erstes Rahmenelement (13a) und ein zweites Rahmenelement (13b) enthält, wobei sowohl das erste als auch das zweite Rahmenelement (13a, 13b) jeweils eine Oberseite (14) sowie eine Unterseite (15) enthält und wobei das erste sowie zweite Rahmenelement (13a, 13b) an der jeweiligen Oberseite (14) miteinander wiederlösbar verbindbar sind und das erste sowie zweite Rahmenelement (13a, 13b) an der jeweiligen Unterseite (15) mit dem Werkzeuggehäuse (2) wiederlösbar verbindbar sind.
